# EUROPÄISCHE PATENTSCHRIFT

(11) **EP 2 952 796 B1**
(45) Veröffentlichungstag und Bekanntmachung des Hinweises auf die Patenterteilung: **28.09.2022**
(21) Anmeldenummer: 15166688.0
(22) Anmeldetag: 07.05.2015
(51) Int. Cl.: F16L 19/028, F16L 19/02

(54) **SCHRAUBELEMENT FÜR DEN ANSCHLUSS VON ROHRLEITUNGEN UND ROHRANSCHLUSSEINRICHTUNG MIT DIESEM SCHRAUBELEMENT**
SCREW ELEMENT FOR THE CONNECTION OF PIPES AND PIPE CONNECTION DEVICE WITH THIS SCREW ELEMENT
ÉLÉMENT DE VISSAGE POUR LE RACCORDEMENT DE TUYAUX ET DISPOSITIF DE RACCORDEMENT DE TUYAUX DOTÉ DUDIT ÉLÉMENT DE VISSAGE

(30) Priorität: 06.06.2014 DE 202014102663 U
(43) Veröffentlichungstag der Anmeldung: 09.12.2015
(73) Patentinhaber: TI Automotive (Heidelberg) GmbH, 69123 Heidelberg (DE)
(72) Erfinder: Stahn, Andreas, 69231 Rauenberg (DE)
(74) Vertreter: Andrejewski - Honke Patent- und Rechtsanwälte Partnerschaft mbB

(56) Entgegenhaltungen:
- EP-A1- 2 136 119
- WO-A1-2007/063079
- WO-A1-2013/176281
- WO-A2-2008/090411

## Beschreibung

Die Erfindung betrifft ein Schraubelement in Form einer Überwurfschraube, insbesondere für den Anschluss von Rohrleitungen. Die Rohrleitungen sind vorzugsweise Kraftfahrzeugrohrleitungen und ganz besonders vorzugsweise Bremsleitungen. An dem Schraubelement sind ein Gewinde sowie zumindest eine gewindefreie Kontaktfläche vorgesehen. Das Schraubelement weist eine äußere Beschichtung und eine innere Beschichtung auf. Die Erfindung betrifft fernerhin eine Rohranschlusseinrichtung für den Anschluss von Rohrleitungen, insbesondere von Kraftfahrzeugrohrleitungen mit einem solchen Schraubelement.

In EP 2 136 119 A1 ist ein Schraubelement in Form einer Überwurfschraube bzw. eines Schraubenbolzens offenbart. Die Überwurfschraube umfasst ein Gewinde sowie zwei gewindefreie Kontaktflächen, wobei eine durchgängige, innere Beschichtung sowie eine nur an den gewindefreien Kontaktflächen angeordnete äußere Beschichtung vorgesehen ist. Die äußere Beschichtung kann beispielsweise Polytetrafluorethylen oder Molybdändisulfid aufweisen.

Schraubelemente bzw. Rohranschlusseinrichtungen der vorstehend beschriebenen Art sind aus der Praxis grundsätzlich bekannt. Insbesondere sind als Schraubenbolzen ausgebildete Schraubelemente bekannt, mit denen Rohrleitungen von Bremsleitungen mit Aggregaten der Bremsleitungen, wie etwa Hauptbremszylinder, Bremsdruckverteiler oder Bremskraftverstärker verbunden werden.

Diese bekannten Schraubelemente sind vollständig mit einer inneren Beschichtung versehen, welche einen ersten höheren Reibwert aufweist. Die bekannten Schraubelemente sind zudem mit einer äußeren Beschichtung versehen, welche lediglich im Bereich der Kontaktflächen aufgetragen ist und einen niedrigeren Reibwert als die innere Beschichtung besitzt. Durch die so verminderte Gleitreibung beim Anziehen der Schraubelemente können diese Schraubelemente stärker angezogen werden, was ein dementsprechendes Lockern der Schraubverbindung erschwert.

Diese vorbekannten Beschichtungen werden mittels Galvanotechnik, Bedampfen o.ä. aufgebracht, was mit einem großen Zeit- und Kostenaufwand verbunden ist.

Zur Lösung dieses technischen Problems lehrt die Erfindung eine Überwurfschraube für den Anschluss von Rohrleitungen, vorzugsweise von Kraftfahrzeugrohrleitungen, wobei an der Überwurfschraube ein Gewinde sowie zumindest eine gewindefreie Kontaktfläche vorgesehen sind, wobei die Überwurfschraube eine äußere Beschichtung, eine innere Beschichtung und ein Metallsubstrat aufweist, wobei die innere Beschichtung zwischen der äußeren Beschichtung und dem Metallsubstrat liegt, wobei die innere Beschichtung im Bereich der zumindest einen Kontaktfläche angeordnet ist, wobei die äußere Beschichtung ein erstes Polymer und Nanopartikel eines ersten Feststoffes enthält, wobei die innere Beschichtung Nanopartikel eines Schmierfeststoffs enthält.

Mit dem Begriff "Schraubelement" sind jegliche verschraubbare Elemente mit einem Gewinde gemeint. Dieser Begriff umfasst ferner ein entsprechendes Metallsubstrat, auf welches beispielsweise Zink- oder Zink-Nickel-Beschichtungen samt Passivierung aufgetragen sind.

Der Ausdruck "Kraftfahrzeugrohrleitung" umfasst unter anderem Leitungen für Kraftstoffe, Harnstofflösungen, Kältemittel und insbesondere Bremsflüssigkeiten. Vorzugsweise handelt es sich bei der erfindungsgemäßen Kraftfahrzeugrohrleitung um eine Rohrleitung für Bremsflüssigkeit.

Kontaktflächen des Schraubelementes sind diejenigen gewindefreien Flächen, welche auf das entsprechende Gegenschraubelement im Falle einer Verschraubung eine Kraft ausüben. Dies kann beispielsweise eine Unterseite eines Schraubenkopfes sein oder aber eine Fußfläche eines Gewindeschafts.

Die Unterscheidung zwischen "äußerer Beschichtung" und "innerer Beschichtung" gilt in zweierlei Hinsicht. Zum ersten handelt es sich um unterschiedliche Materialien und zum zweiten liegt die innere Beschichtung zwischen der äußeren Beschichtung und dem Metallsubstrat des Schraubelements. Dabei soll der Ausdruck "innere" nicht mit "innerste" gleichgesetzt werden. Analog gilt dies auch für den Ausdruck "äußere".

Als Polymere kommen insbesondere Polykondensate in Betracht. Vorzugsweise ist das Polymer ein Polyamid oder ein Polyimid.

Der Begriff "Nanopartikel" meint Partikel, welche arithmetisch gemittelte Korngrößen zwischen 1 nm und 10.000 nm, vorzugsweise zwischen 10 nm und 1.000 nm und besonders vorzugsweise zwischen 20 nm und 400 nm aufweisen. Gemäß einer besonders bevorzugten Ausführungsform beträgt die arithmetisch gemittelte Korngröße der Nanopartikel 50 nm bis 200 nm.

Bevorzugt ist der erste Feststoff ein Stoff mit hoher Härte oder ein Schmierfeststoff. Insbesondere weist der erste Feststoff eine Mohshärte > 7 und vorzugsweise > 8 auf. Der erste Feststoff ist bevorzugt ein Metalloxid und insbesondere ausgewählt aus der Gruppe der Stoffe "Aluminiumoxid (Korund), Eisenoxid, Siliciumcarbid, Siliciumdioxid, Siliciumnitrid, Titancarbid, Titannitrid".

Als Schmierfeststoffe eignen sich insbesondere Bornitrid, Graphit, Molybdändisulfid, Polytetrafluorethylen, Kohlefasern.

Es liegt im Rahmen der Erfindung, dass die äußere Beschichtung das Schraubelement großenteils und vorzugsweise vollständig bedeckt. Der Ausdruck "großenteils" meint, dass mindestens 50 % der Oberfläche des Schraubelementes von der äußeren Beschichtung bedeckt ist. Insbesondere bedeckt die äußere Beschichtung die innere Beschichtung. Vorzugsweise bedeckt die äußere Beschichtung die innere Beschichtung und darüber hinaus auch die restliche Oberfläche des Schraubelementes.

Vorteilhafterweise ist der Reibwert µ₁ der äußeren Beschichtung größer als der Reibwert µ₂ der inneren Beschichtung. Der Reibwert µ₁ der äußeren Beschichtung liegt vorzugsweise zwischen 0,1 und 0,8, besonders vorzugsweise zwischen 0,15 und 0,5 und ganz besonders vorzugsweise zwischen 0,2 und 0,4. Der Reibwert µ₂ der inneren Beschichtung liegt vorzugsweise zwischen 0,01 und 0,3, besonders vorzugsweise zwischen 0,02 und 0,15 und ganz besonders vorzugsweise zwischen 0,03 und 0,1. Die Reibwerte oder auch Reibungskoeffizienten beziehen sich stets auf die trocken ermittelte Gleitreibung auf Aluminium.

Vorteilhafterweise ist die innere Beschichtung lediglich auf der zumindest einen Kontaktfläche angeordnet. Besonders vorzugsweise ist die innere Beschichtung lediglich auf zwei Kontaktflächen angeordnet. Insbesondere ist die innere Beschichtung auf der Unterseite des Schraubenkopfes angeordnet. Vorzugsweise ist die innere Beschichtung auf einer Fußfläche eines Gewindeschafts aufgetragen.

Gemäß einer vorteilhaften Ausführungsform beträgt die Schichtdicke der äußeren Beschichtung 0,5 µm bis 10 µm. Vorzugsweise beträgt die Schichtdicke der äußeren Beschichtung 1 µm bis 5 µm und ganz besonders vorzugsweise 2 µm bis 4 µm. Es liegt im Rahmen der Erfindung, dass die Schichtdicke der inneren Beschichtung 10 µm bis 100 µm beträgt. Vorzugsweise beträgt die Schichtdicke 20 µm bis 40 µm und ganz besonders vorzugsweise 25 µm bis 35 µm.

Es liegt im Rahmen der Erfindung, dass der Anteil der Nanopartikel in der äußeren Beschichtung 2 % bis 40 % und vorzugsweise 5 % bis 20 % des Gewichts der äußeren Beschichtung beträgt. Das Gewicht bezieht sich hierbei auf die aufgetragene und erhärtete Schicht. Ganz besonders vorzugsweise beträgt der Anteil der Nanopartikel in der äußeren Beschichtung 8 % bis 15 % des Gewichts der äußeren Beschichtung.

Es liegt im Rahmen der Erfindung, dass die innere Beschichtung ein Polymer enthält. Das Polymer ist vorzugsweise ein Polykondensat und besonders vorzugsweise Polyamid oder Polyimid. Vorzugsweise enthält die innere Beschichtung Nanopartikel eines zweiten Feststoffs. Ganz besonders vorzugsweise ist der zweite Feststoff PTFE oder Molybdändisulfid. Es liegt im Rahmen der Erfindung, dass der Anteil der Nanopartikel in der inneren Beschichtung 2 % bis 40 % und vorzugsweise 5 % bis 20 % des Gewichts beträgt. Ganz besonders vorzugsweise beträgt der Anteil der Nanopartikel in der inneren Beschichtung 8 % bis 15 %.

Der Ausdruck "Überwurfschraube" meint insbesondere, dass das Schraubelement eine Durchgangsbohrung aufweist. Vorzugsweise ist das Gewinde des Schraubelementes als Außengewinde ausgebildet. Gemäß einer vorteilhaften Ausführungsform weist das Schraubelement einen Schraubenkopf auf, durch welchen sich gleichfalls die Durchgangsbohrung zieht. Der Schraubenkopf umfasst eine unterseitige Kontaktfläche.

Die Erfindung betrifft ferner eine Rohranschlusseinrichtung für den Anschluss von Rohrleitungen, insbesondere von Kraftfahrzeugrohrleitungen, mit einem erfindungsgemäßen Schraubelement und mit einem Anschlusselement, wobei das Schraubelement mit dem Anschlusselement verschraubbar ist.

Es liegt im Rahmen der Erfindung, dass in einem eingebauten Zustand die Kontaktflächen des Schraubelementes an Kontaktflächen des Anschlusselements bzw. an Kontaktflächen eines Bördels der Rohrleitung anliegen. Vorzugsweise ist der Bördel der Rohrleitung als F-Bördel ausgebildet. Gemäß einer vorteilhaften Ausführungsform weist der Bördel eine Dichtfläche auf, welche einer Anschlussfläche des Anschlusselements zugeordnet ist und entsprechend komplementär geformt ist. Gemäß einer anderen Ausführungsform ist der Bördel der Rohrleitung als E-Bördel ausgebildet.

Die Erfindung betrifft zudem ein Verfahren zur Herstellung von Überwurfschrauben, insbesondere von erfindungsgemäßen Überwurfschrauben, wobei die Überwurfschraube ein Gewinde und zumindest eine gewindefreie Kontaktfläche aufweist, wobei die Überwurfschraube mit einer inneren Beschichtung beschichtet wird, wobei dann die Überwurfschraube mit einer äußeren Beschichtung versehen wird, wobei die Überwurfschraube ein Metallsubstrat aufweist, wobei die innere Beschichtung zwischen der äußeren Beschichtung und dem Metallsubstrat liegt, wobei die innere Beschichtung im Bereich der zumindest einen Kontaktfläche angeordnet ist, wobei die äußere Beschichtung ein erstes Polymer und Nanopartikel eines ersten Feststoffes enthält, wobei die innere Beschichtung Nanopartikel eines Schmierfeststoffs enthält.

Vorzugsweise wird die äußere Beschichtung mittels Sprühtrommel auf dem Schraubelement aufgebracht. Vorteilhafterweise wird die innere Beschichtung mittels Sprühtrommel auf dem Schraubelement aufgetragen.

Der Erfindung liegt die Erkenntnis zugrunde, dass aufgrund der erfindungsgemäßen Lehre ein unbeabsichtigtes Lockern des Schraubelementes auf einfache Weise vermieden werden kann. Durch die erfindungsgemäße Aufbringung verschiedener Beschichtungen wurde überraschend gefunden, dass dies auch gilt, wenn die innere Beschichtung einen geringeren Reibwert als die äußere Beschichtung aufweist. Der Effekt beruht darauf, dass die Haftung zwischen der inneren und der äußeren Beschichtung gering ist, so dass beim Festziehen des Schraubelementes die beiden Beschichtungen übereinander gleiten. Dieses Gleiten gleicht die Torsionskräfte beim Anziehen des Schraubelementes aus. Dementsprechend fest kann die Schraube angezogen werden. Gleichzeitig verhindern Bereiche mit höheren Reibwerten, beispielsweise am Gewinde, das Lösen des Schraubelementes.

Der Erfindung liegt ferner die Erkenntnis zugrunde, dass die Nanopartikel das Ausbreiten von Rissen in den Beschichtungen behindern. Wird eine erfindungsgemäße Beschichtung verletzt, so ist sie aufgrund der Vermeidung der Rissbildung stabiler und schützt infolgedessen das Schraubelement besser vor Korrosion. Insbesondere eine Unterwanderung der äußeren Beschichtung wird somit vermieden. Außerdem führen Partikelgrößen im Nanometerbereich dazu, dass die Schichten entsprechend dünn gewählt werden können. Auf diese Weise ist eine Maßhaltigkeit der erfindungsgemäßen Schraubelemente leichter zu erreichen. Die Kombination von Polymer und Nanopartikeln ermöglicht eine gute Mischbarkeit beider Stoffe bei gleichzeitig einfachem und damit kostengünstigem Auftragen, beispielsweise mittels Sprühtrommeln. Aufgrund der guten Mischbarkeit ist es auch möglich, die entsprechenden Feststoffe aufeinander abzustimmen und so beispielsweise die Reibwerte nach Wunsch einzustellen.

Nachfolgend wird die Erfindung anhand einer lediglich ein Ausführungsbeispiel darstellenden Zeichnung näher erläutert. Es zeigen in schematischer Darstellung:
- Fig. 1: einen Längsschnitt eines als Schraubenbolzen bzw. Überwurfschraube ausgebildeten erfindungsgemäßen Schraubelementes in eingebautem Zustand,
- Fig. 2: den Schraubenbolzen aus Fig. 1 in einer symbolisierten Seitenansicht.

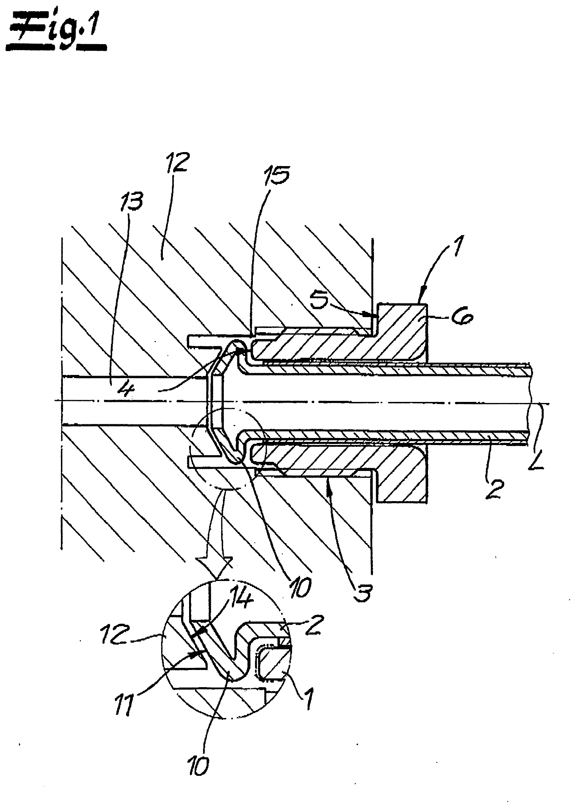

In Fig. 1 ist ein als Schraubenbolzen 1 ausgebildetes Schraubelement in ein Anschlusselement in Form eines Anschlussblocks 12 eingeschraubt. Hierzu weist der Schraubenbolzen 1 ein Gewinde 3 in Form eines Außengewindes und der Anschlussblock 12 eine Sackbohrung 15 mit einem Innengewinde auf. Vor dem Verschrauben wurde bereits eine Rohrleitung 2 mit einer Längsachse L in den Schraubenbolzen 1 eingeführt, so dass mit Verschraubung der Schraubenbolzen 1 einen Bördel 10 zwischen sich und dem Anschlussblock 12 einklemmt.

Mit Anziehen des Schraubenbolzens 1 über einen Schraubenkopf 6 am Schraubenbolzen 1 presst der Schraubenbolzen 1 mit einer Kontaktfläche 4 gegen den Bördel 10. Gleichermaßen presst eine Dichtfläche 11 des Bördels 10 gegen eine Anschlussfläche 14 des Anschlussblocks 12. Auf diese Weise wird eine fluiddichte Verbindung zwischen der Rohrleitung 2 und einer im Anschlussblock 12 integrierten Leitung 13 erzeugt, so dass der Austritt von Bremsflüssigkeit vermieden wird.

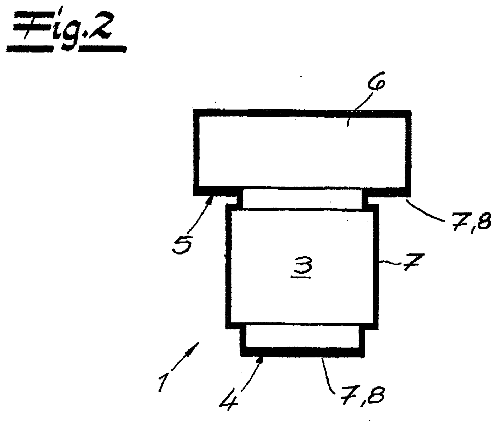

Fig. 2 zeigt den Schraubenbolzen 1 aus Fig. 1 in einer symbolisierten Seitenansicht, wobei die fett gehaltene äußere Umrandung des Schraubenbolzens 1 die Beschichtungen 7, 8 symbolisiert. Die äußere Beschichtung 7 bedeckt die Oberfläche des Schraubenbolzens 1 vollständig. Die innere Beschichtung 8 hingegen ist lediglich an den Kontaktflächen 4, 5 des Schraubenbolzens 1 aufgebracht.

Der Schraubenbolzen 1 wird in an sich bekannter Weise hergestellt. Diese Herstellung umfasst auch eine Korrosionsschutzbeschichtung, welche Zink und Nickel enthält. Die Korrosionsschutzbeschichtung wird dann mit einer Passivierungsschicht überzogen, welche wiederum die Zink-Nickel-Beschichtung schützt. Erst darüber wird die innere Beschichtung 8 und zuletzt die äußere Beschichtung 7 aufgetragen.

Sowohl die innere Beschichtung 8 als auch die äußere Beschichtung 7 enthalten ein Bindemittel aus einem Polykondensat. Das Polykondensat der inneren Beschichtung 8 bindet Molybdändisulfid-Nanopartikel mit einer arithmetisch gemittelten Korngröße von 100 nm. Der Anteil der Molybdändisulfid-Nanopartikel an der inneren Beschichtung 8 entspricht 10 Gew.-%. Die innere Beschichtung wurde mit einer Schichtdicke von 30 µm aufgetragen.

Die äußere Beschichtung 7 ist mit Wolframdisulfid-Nanopartikeln versehen. Die Wolframdisulfid-Nanopartikel weisen eine mittlere Korngröße von 180 nm auf und entsprechen 15 Gew.-% der äußeren Beschichtung 7. Als Schichtdicke der äußeren Beschichtung 7 wurden 4 µm gewählt. Beide Beschichtungen 7, 8 werden mittels Sprühtrommel aufgetragen.

## Patentansprüche

1. Überwurfschraube für den Anschluss von Rohrleitungen (2), vorzugsweise von Kraftfahrzeugrohrleitungen, wobei an der Überwurfschraube ein Gewinde (3) sowie zumindest eine gewindefreie Kontaktfläche (4, 5) vorgesehen sind, wobei die Überwurfschraube eine äußere Beschichtung (7), eine innere Beschichtung (8) und ein Metallsubstrat aufweist, wobei die innere Beschichtung (8) zwischen der äußeren Beschichtung (7) und dem Metallsubstrat liegt, wobei die innere Beschichtung (8) im Bereich der zumindest einen Kontaktfläche (4, 5) angeordnet ist,
**dadurch gekennzeichnet, dass**
die äußere Beschichtung (7) ein erstes Polymer und Nanopartikel eines ersten Feststoffs enthält,
wobei die innere Beschichtung (8) Nanopartikel eines Schmierfeststoffs enthält.

2. Überwurfschraube nach Anspruch 1, wobei die äußere Beschichtung (7) die Überwurfschraube großenteils und vorzugsweise vollständig bedeckt.

3. Überwurfschraube nach Anspruch 1 oder 2, wobei der Reibwert µ₁ der äußeren Beschichtung (7) größer ist als der Reibwert µ₂ der inneren Beschichtung (8).

4. Überwurfschraube nach einem der Ansprüche 1 bis 3, wobei die Schichtdicke der äußeren Beschichtung (7) 0,5 bis 10 µm, vorzugsweise 1 bis 5 µm, beträgt.

5. Überwurfschraube nach einem der Ansprüche 1 bis 4, wobei die Schichtdicke der inneren Beschichtung (8) 10 bis 100 µm, vorzugsweise 20 bis 40µm, beträgt.

6. Überwurfschraube nach einem der Ansprüche 1 bis 5, wobei der Anteil der Nanopartikel in der äußeren Beschichtung (7) 2 bis 40 % und vorzugsweise 5 bis 20 % des Gewichts beträgt.

7. Überwurfschraube nach einem der Ansprüche 1 bis 6, wobei die innere Beschichtung (8) ein Polymer enthält.

8. Überwurfschraube nach einem der Ansprüche 1 bis 7, wobei der Anteil der Nanopartikel in der inneren Beschichtung (8) 2 bis 40 % und vorzugsweise 5 bis 20 % des Gewichts beträgt.

9. Rohranschlusseinrichtung für den Anschluss von Rohrleitungen (2), insbesondere von Kraftfahrzeugrohrleitungen,
mit einer Überwurfschraube nach einem der Ansprüche 1 bis 8 und
mit einem Anschlusselement,
wobei die Überwurfschraube mit dem Anschlusselement verschraubbar ist.

10. Rohranschlusseinrichtung nach Anspruch 9, wobei in einem eingebauten Zustand die Kontaktflächen der Überwurfschraube (4, 5) an Kontaktflächen des Anschlusselementes bzw. an Kontaktflächen eines Bördels (10) der Rohrleitung (2) anliegen.

11. Verfahren zur Herstellung von Überwurfschrauben, insbesondere von Überwurfschrauben gemäß einem der Ansprüche 1 bis 8, wobei die Überwurfschraube ein Gewinde (3) und zumindest eine gewindefreie Kontaktfläche (4, 5) aufweist, wobei die Überwurfschraube mit einer inneren Beschichtung (8) beschichtet wird, wobei dann die Überwurfschraube mit einer äußeren Beschichtung (7) versehen wird, wobei die Überwurfschraube ein Metallsubstrat aufweist, wobei die innere Beschichtung (8) zwischen der äußeren Beschichtung (7) und dem Metallsubstrat liegt, wobei die innere Beschichtung (8) im Bereich der zumindest einen Kontaktfläche (4, 5) angeordnet ist,
**dadurch gekennzeichnet, dass**
die äußere Beschichtung (7) ein erstes Polymer und Nanopartikel eines ersten Feststoffes enthält,
wobei die innere Beschichtung (8) Nanopartikel eines Schmierfeststoffs enthält.

## Claims

1. A union screw for connecting pipes (2), preferably motor vehicle pipes, wherein the union screw is provided with a thread (3) as well as at least one threadless contact surface (4, 5), wherein the union screw has an outer coating (7), an inner coating (8) and a metal substrate, wherein the inner coating (8) lies between the outer coating (7) and the metal substrate, wherein the inner coating (8) is arranged in the area of the at least one contact surface (4, 5),
**characterized in that**
the outer coating (7) contains a first polymer and nanoparticles of a first solid,
wherein the inner coating (8) contains nanoparticles of a lubricating solvent.

2. The union screw according to claim 1, wherein the outer coating (7) largely, and preferably completely, covers the union screw.

3. The union screw according to claim 1 or 2, wherein the friction value µ₁ of the outer coating (7) is larger than the friction value µ₂ of the inner coating (8).

4. The union screw according to one of claims 1 to 3, wherein the layer thickness of the outer coating (7) measures 0.5 to 10 µm, preferably 1 to 5 µm.

5. The union screw according to one of claims 1 to 4, wherein the layer thickness of the inner coating (8) measures 10 to 100 µm, preferably 20 to 40 µm.

6. The union screw according to one of claims 1 to 5, wherein the percentage of nanoparticles in the outer coating (7) measures 2 to 40%, and preferably 5 to 20% of the weight.

7. The union screw according to one of claims 1 to 6, wherein the inner coating (8) contains a polymer.

8. The union screw according to one of claims 1 to 7, wherein the percentage of nanoparticles in the inner coating (8) measures 2 to 40%, and preferably 5 to 20% of the weight.

9. A pipe connecting device for connecting pipes (2), in particular motor vehicle pipes,
with a union screw according to one of claims 1 to 8, and
with a connection element,
wherein the union screw can be screwed with the connection element.

10. The pipe connecting device according to claim 9, wherein, in an installed state, the contact surfaces of the union screw (4, 5) abut against contact surfaces of the connection element or against contact surfaces of a flare (10) of the pipe (2).

11. A method for manufacturing union screws, in particular of union screws according to one of claims 1 to 8, wherein the union screw has a thread (3) and at least one threadless contact surface (4, 5), wherein the union screw is coated with an inner coating (8), wherein the union screw is then provided with an outer coating (7), wherein the union screw has a metal substrate, wherein the inner coating (8) lies between the outer coating (7) and the metal substrate, wherein the inner coating (8) is arranged in the area of the at least one contact surface (4, 5),
**characterized in that**
the outer coating (7) contains a first polymer and nanoparticles of a first solid,
wherein the inner coating (8) contains nanoparticles of a lubricating solvent.

## Revendications

1. Vis chapeau pour le raccordement de conduits (2), de préférence de conduits de véhicule automobile, sachant que sur la vis chapeau sont prévus un filetage (3) ainsi qu'au moins une surface de contact sans filetage (4, 5), sachant que la vis chapeau comporte un revêtement extérieur (7), un revêtement intérieur (8) et un substrat métallique, sachant que le revêtement intérieur (8) se situe entre le revêtement extérieur (7) et le substrat métallique, sachant que le revêtement intérieur (8) est disposé dans la zone d'au moins une surface de contact (4, 5),
**caractérisée en ce que**
le revêtement extérieur (7) contient un premier polymère et des nanoparticules d'une première matière solide,
sachant que le revêtement intérieur (8) contient des nanoparticules d'une matière solide lubrifiante.

2. Vis chapeau selon la revendication 1, sachant que le revêtement extérieur (7) recouvre en grande partie et de préférence complètement la vis chapeau.

3. Vis chapeau selon la revendication 1 ou 2, sachant que le coefficient de frottement µ₁ du revêtement extérieur (7) est plus grand que le coefficient de frottement µ₂ du revêtement intérieur (8).

4. Vis chapeau selon l'une quelconque des revendications 1 à 3, sachant que l'épaisseur de la couche du revêtement extérieur (7) est de 0,5 à 10 µm, de préférence de 1 à 5 µm.

5. Vis chapeau selon l'une quelconque des revendications 1 à 4, sachant que l'épaisseur de la couche du revêtement intérieur (8) est de 10 à 100 µm, de préférence de 20 à 40 µm.

6. Vis chapeau selon l'une quelconque des revendications 1 à 5, sachant que la part de nanoparticules dans le revêtement extérieur (7) est de 2 à 40 % et de préférence de 5 à 20 % du poids.

7. Vis chapeau selon l'une quelconque des revendications 1 à 6, sachant que le revêtement intérieur (8) contient un polymère.

8. Vis chapeau selon l'une quelconque des revendications 1 à 7, sachant que la part des nanoparticules dans le revêtement intérieur (8) est de 2 à 40 % et de préférence de 5 à 20 % du poids.

9. Dispositif de raccord tubulaire pour le raccordement de conduits (2), en particulier de conduits de véhicule automobile,
avec une vis chapeau selon l'une quelconque des revendications 1 à 8 et
avec un élément de raccord,
sachant que la vis chapeau peut être vissée avec l'élément de raccord.

10. Dispositif de raccord tubulaire selon la revendication 9, sachant que dans un état monté, les surfaces de contact de la vis chapeau (4, 5) s'appliquent aux surfaces de contact de l'élément de raccord ou aux surfaces de contact d'un rebord (10) du conduit (2).

11. Procédé de fabrication de vis chapeaux, en particulier de vis chapeaux selon l'une quelconque des revendications 1 à 8, sachant que la vis chapeau comporte un filetage (3) et au moins une surface de contact non filetée (4, 5), sachant que la vis chapeau est revêtue d'un revêtement intérieur (8), sachant qu'ensuite la vis chapeau est dotée d'un revêtement extérieur (7), sachant que la vis chapeau comporte un substrat métallique, sachant que le revêtement intérieur (8) se situe entre le revêtement extérieur (7) et le substrat métallique, sachant que le revêtement intérieur (8) est disposé dans la zone d'au moins une surface de contact (4, 5),
**caractérisé en ce que**
le revêtement extérieur (7) contient un premier polymère et des nanoparticules d'une première matière solide,
sachant que le revêtement intérieur (8) contient des nanoparticules d'une matière solide lubrifiante.
